# FASCICULE DE BREVET EUROPEEN

(11) **EP 1 595 385 B1**
(45) Date de publication et mention de la délivrance du brevet: **28.03.2007**
(21) Numéro de dépôt: 04711375.8
(22) Date de dépôt: 16.02.2004
(51) Int. Cl.: H04L 29/14, H04L 12/56, H04L 12/28, H04L 12/24, H04L 1/20

(54) **ARCHITECTURE DE RESEAU ETHERNET/IP A HAUTE DISPONIBILITE DE SERVICE**
HOCHVERFÜGBARE ETHERNET/IP-NETZWERKARCHITEKTUR
HIGH SERVICE AVAILABILITY ETHERNET/IP NETWORK ARCHITECTURE

(30) Priorité: 18.02.2003 FR 0301951
(43) Date de publication de la demande: 16.11.2005
(73) Titulaire: Thales, 92526 Neuilly Sur Seine (FR)
(72) Inventeur: BRUTE DE REMUR, Valérie, THALES Intellectual Pty, F-94117 Arcueil (FR); DILLON, Patrick, THALES Intellectual Pty, F-94117 Arcueil (FR)
(74) Mandataire: Dudouit, Isabelle
(86) Numéro de dépôt international: PCT/EP2004/050137
(87) Numéro de publication internationale: WO 2004/075452

(56) Documents cités:
- EP-A- 0 757 504
- EP-A- 1 056 234
- WO-A-02/098059
- US-A1- 2002 004 843

## Description

La présente invention se rapporte à une architecture de réseau Ethernet/IP à haute disponibilité de service.

Pour de nombreux systèmes de contrôle, l'exigence de leur disponibilité est très élevée et implique un temps d'interruption de service minimum et maîtrisé en cas de défaillance d'un élément de ces systèmes. Cette exigence de disponibilité s'exprime lors de l'exploitation des systèmes et doit être ensuite, lors de l'analyse d'ingénierie système, appliquée au niveau des différents éléments composants le système. Cette exigence s'applique en particulier aux moyens de communication (données, voix, vidéo) entre les différents éléments composant un système.

Dans le cas d'un système de contrôle de trafic aérien, le temps maximal d'interruption de service de communication entre éléments du système est de l'ordre de 2 secondes pour les données et de 0,5 seconde au plus pour la voix et certaines données dites temps réel (flux radars).

La conception de l'architecture du réseau de communication associée à des mécanismes de redondance locaux ou répartis des équipements constituant le réseau permet de répondre, suivant les technologies, plus ou moins bien à cette exigence de disponibilité.

Le facteur économique étant un élément prépondérant à prendre en compte dans la conception des systèmes, l'utilisation de standards du marché et d'équipements sur étagère (« COTS ») est incontournable. Pour les réseaux de communication, le standard Ethernet s'est imposé au niveau physique et le protocole IP (Intemet Protocol) au niveau réseau.

Dans son succès, le standard Ethernet a « tué » le standard FDDI qui répondait nativement aux exigences de ces systèmes avec un temps maximal d'interruption de service de communication de l'ordre de quelques centaines de millisecondes.

Dans l'état actuel de l'art, la technologie Ethernet et les équipements associés permettent d'atteindre un temps maximal d'interruption de service de communication de l'ordre de 2 secondes. Cette performance permet de répondre à l'exigence pour les données mais pas pour la voix et autres flux temps réel qui sont maintenant transportés sur le protocole IP (« VolP », c'est-à-dire « Voice over IP »).

Le brevet US 2002/004843 A1 expose un mécanisme permettant de compenser rapidement les changements d'un réseau. Le réseau décrit dans ce docuement, comporte des noeuds, chaque noeud calculant un chemin principal et un ensemble de chemin de secours, utilisé lorsqu'un changement ou une défaillance du réseau a été détecté.

La présente invention a pour objet une architecture Ethernet/IP qui respecte les contraintes suivantes :
- Utilisation d'équipements COTS de base au standard Ethernet
- Utilisation de protocoles standard
- Pas de restriction sur la taille et la configuration du réseau
- Transparence pour les applications
- Développement minimal et uniquement logiciel
- Permettre la cohabitation d'équipements terminaux hétérogènes.

L'architecture conforme à l'invention est une architecture de réseau Ethernet/IP à haute disponibilité de service, permettant une diffusion de flux de données sans interruption de service, ces flux cohabitant avec d'autres flux tolérant une interruption de service, et elle est caractérisée en ce que le réseau comporte une superposition de deux architectures de réseaux à tolérance de pannes, dont l'une est réalisée sous la forme d'un réseau unique à infrastructure maillée et l'autre sous la forme d'une infrastructure comportant deux réseaux indépendants.

Selon une autre caractéristique de l'invention, les équipements terminaux, ayant une contrainte de disponibilité sur les flux de données qu'ils traitent, sont reliés par deux liens physiques à deux équipements distincts des infrastructures réseaux.

Selon une autre caractéristique, n'importe quel type d'équipement terminal communique avec n'importe quel autre type d'équipement terminal.

Selon encore une autre caractéristique, l'architecture est extensible en termes de redondance.

Selon encore une autre caractéristique, l'architecture est extensible en termes de taille de réseau.

Selon encore une autre caractéristique, le réseau comporte des routeurs.

La présente invention sera mieux comprise à la lecture de la description détaillée d'un mode de réalisation, pris à titre d'exemple non limitatif et illustré par le dessin annexé, sur lequel :
- la figure 1 est un bloc-diagramme d'une architecture réseau maillée connue,- la figure 2 est un bloc-diagramme d'une architecture réseau connue à deux réseaux indépendants,
- la figure 3 est le bloc-diagramme simplifié d'une architecture conforme à l'invention, et
- les figures 4 à 7 sont des blocs-diagrammes de variantes conformes à l'invention de l'architecture de la figure 3.

Les équipements dont il sera question dans la suite de la description sont soit des équipements d'infrastructure réseau (ER), soit des équipements terminaux (ET). Les équipements réseau sont principalement des commutateurs Ethernet (par exemple de marque CISCO, de la famille CATALYST ^{™}). Les équipements terminaux peuvent être tous types d'équipements de traitement d'informations (données ou voix par exemple), raccordés au réseau. Parmi les équipements terminaux, on distingue :
- Les ETS : Equipements Terminaux avec Simple attachement sur le réseau (par exemple une imprimante),
- Les ETD : Equipements Terminaux avec Double attachement sur le réseau (par exemple une station de travail),
- Les ETDT : Equipements Terminaux avec Double attachement sur le réseau et traitant des flux Temps réel sensible (par exemple une « gateway radio »).

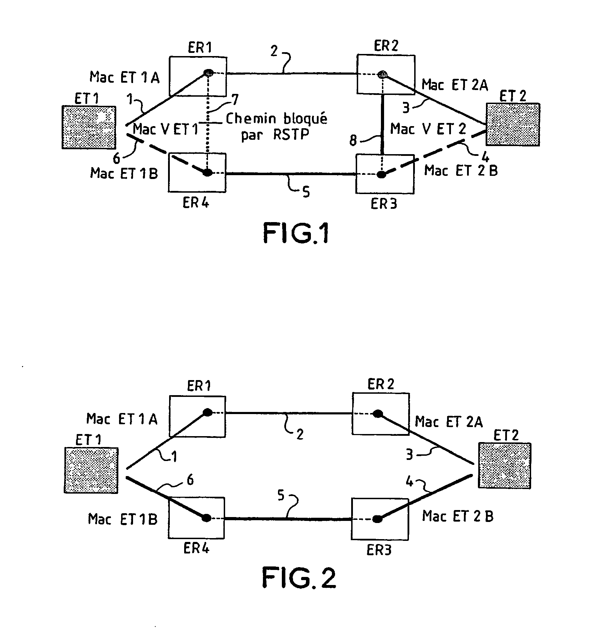

On a représenté en figure 1 le bloc-diagramme d'une architecture à réseau maillé élémentaire connu. Cette architecture redondante comporte au moins deux équipements terminaux quelconques, respectivement référencés ET1 et ET2. Chaque équipement ET est relié physiquement à deux ER. L'équipement ET1 est relié par un lien 1 à un premier ER référencé ER1 qui est relié à un deuxième ER référencé ER2 par un lien 2. L'équipement ET2 est relié à l'ER2 par un lien 3, et il est relié d'autre part par un lien 4 à un troisième ER, référencé ER3. L'équipement ER3 est relié par un lien 5 à un quatrième ER référencé ER4. Ce dernier est relié par un lien 6 à l'équipement ET1. Des liens 7 et 8 relient respectivement ER1 à ER4 et ER2 à ER3. Les liens entre les différents éléments constituant l'architecture sont en « full duplex » sur des liens physiques de type cuivre ou fibre optique.Cette architecture redondante est basée sur le « double attachement » (« dual homing » en anglais) des ET et la topologie maillée des réseaux utilisant le nouveau standard RSTP (RSTP : Rapid Spanning Tree Protocol - IEEE 802.1w). Elle permet de répondre à l'exigence d'interruption maximale de 2 secondes de communication entre les deux ET. Dans l'exemple représenté, qui se rapporte à une situation de service normale, les liens 4 et 6 ne sont pas utilisés par les équipements ET1 et ET2, et le lien 7 est bloqué par le protocole RSTP. Ainsi, une seule des connexions physiques entre les ET et les ER correspondants est active à un instant T et a pour adresse l'adresse virtuelle Mac V (adresse Mac V ET1 pour ET1 et Mac V ET2 pour ET2) de l'équipement. Une adresse IP unique est associée à l'adresse Mac V. Les autres adresses Mac n'ont pas d'adresse IP associée.

Lorsque, par exemple, l'équipement ET1 détecte une défaillance de connexion du lien 1, il commute du lien 1 vers le lien 6 en activant l'adresse virtuelle Mac V ET1 sur l'interface du lien 6. Pour garantir le temps de basculement du système, une trame diffusée contenant l'adresse Mac V ET1 doit être envoyée sur le nouveau lien actif (dans l'exemple le lien 6) pour que les ER puissent mettre à jour leur table de correspondance ports/adresses Mac. Le temps de détection additionné à celui du basculement jusqu'à la prise en compte par les ER demande généralement moins de 2 secondes.

La fonction de double attachement telle que décrite ci-dessus existe de base sur un certain nombre de COTS logiciels (par exemple UNUX (BONDING), WINDOWS^{™}, TRU 64 (NETRAIN^{™}), HPUX^{™} (APA^{™})) et matériels (« dual transceivers »).

Grâce à la topologie maillée utilisée, la perte d'un équipement réseau ou d'un lien inter-équipements réseau provoque un calcul RSTP qui remet en service le lien bloqué en moins de 2 secondes (lien 7 dans l'exemple donné sur la figure 1).

Cette architecture permet donc d'éviter tout point unique de défaillance (« single point of failure ») et d'avoir une reconfiguration en moins de 2 secondes en cas de panne d'un ER ou d'un lien physique. De plus, elle est basée sur des solutions standard permettant l'utilisation intensive des COTS et n'impose pas, dans le cas où cela ne s'avère pas nécessaire, que tous les éléments du système aient un double attachement pour qu'ils puissent communiquer entre eux. Cependant, elle ne permet pas de résoudre la contrainte de moins de 0,5 seconde imposée pour les flux temps réel sensibles.

L'utilisation d'une architecture basée sur des réseaux indépendants permet de répondre à cette contrainte. Cette architecture est représentée en figure 2. Sur cette figure, comme sur les figures suivantes, les éléments similaires à ceux de la figure 1 sont affectés des mêmes références numériques. A la différence de l'architecture de la figure 1, celle de la figure 2 ne comporte pas les liens 7 et 8. Les équipements ET1 et ET2 échangent des informations entre eux par deux réseaux indépendants Le premier réseau passe par les équipements ER1 et ER2 et comporte respectivement les liens 1 à 3, et le deuxième passe par les équipements ER3 et ER4 et comporte respectivement les liens 4 à 6. Les deux connexions physiques des deux ET (1 et 6, et 3 et 4) sont actives en même temps comme décrit ci-après.

Quand un ET veut émettre, il émet les mêmes informations sur les deux liens à la fois. L'ET récepteur peut soit recevoir sur un seul lien et basculer en état de non réception d'informations sur le deuxième, soit, si sa puissance de calcul le permet, recevoir sur les deux liens à la fois et ne pas tenir compte des informations dupliquées. Dans le premier cas, l'exigence de moins de 0,5 seconde ne peut être remplie que si la fréquence de réception des informations est suffisamment élevée. Dans le deuxième cas, il est possible d'atteindre la non-interruption de service en cas de défaillance d'un élément constitutif du réseau (par exemple ER ou lien), y compris les moyens de connexion des équipements terminaux au réseau.

Cette solution est bien adaptée aux flux temps réel utilisant des protocoles tels que RTP (A Transport Protocol for Real-Time Applications - IETF RFC 1889), où l'élimination des duplications d'informations peut être gérée par des numéros de séquence. Par contre, pour les autres types de flux où la redondance est moins bien traitée nativement, les mécanismes de réception sont beaucoup plus délicats à réaliser et ne sont pas forcément transparents pour les applications et les souches logicielles réseau. Une solution serait de n'émettre et recevoir que sur un seul réseau à la fois, mais à ce moment- là, c'est la synchronisation de tous les équipements terminaux sur le même réseau qui devient problématique, surtout dans une architecture distribuée.

Un autre inconvénient de cette solution réside dans le fait que tous les équipements du système doivent posséder un double attachement et disposer de cette fonction d'émission et réception sur les deux réseaux, fonction qui est propriétaire.

La solution conforme à la présente invention propose de superposer l'architecture du réseau maillé à celle des réseaux indépendants et donc de bénéficier simultanément des avantages de ces deux architectures. Une telle superposition est permise par la technologie VLAN (Réseaux locaux virtuels, voir: VLAN trunking: IEEE 802.1q). Bien entendu, d'autres technologies permettant la superposition des types d'architecture réseau peuvent être mises en oeuvre dans l'architecture de l'invention.

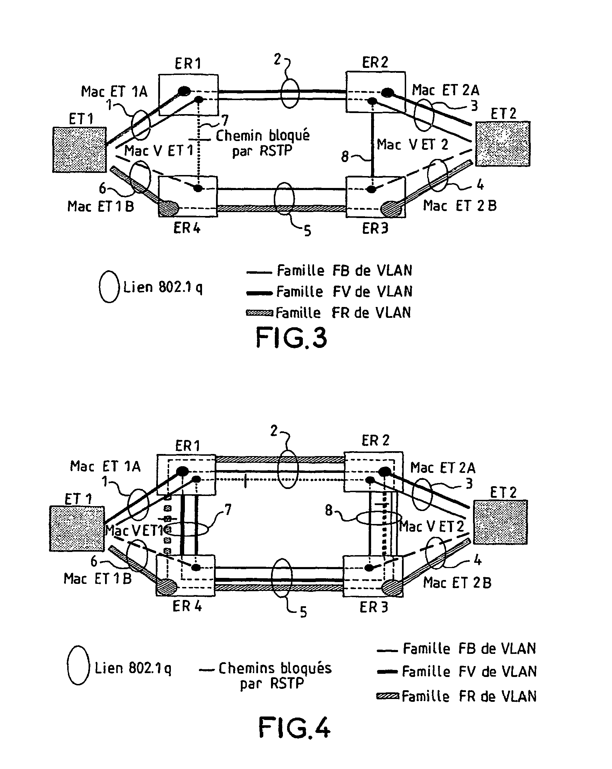

Pour ce faire, trois familles de VLAN sont mises en place sur les équipements, comme représenté en figure 3. Ces familles sont respectivement référencées FV, FR et FB. La famille FV utilise comme chemin les liens 1 à 3, tandis que la famille FR utilise comme chemin les liens 4 à 6. La famille FB utilise comme chemin tous les liens 1 à 8.

La famille FB est dédiée aux flux tolérants aux interruptions de service et chemine par tous les ER, les boucles de niveau 2 étant gérées par une instance dédiée de RSTP/MSTP (pour MSTP, voir : Multiple STP - IEEE 802.1s). Bien entendu, des protocoles autres que RSTP, permettant une configuration rapide et gérant les boucles de niveau 2 peuvent être mis en oeuvre dans l'architecture de l'invention.

Comme dans l'exemple de la figure 1, le chemin de la famille FB sur le lien 7 est bloqué par le protocole RSTP en situation normale.

Les deux autres familles (FV et FR) sont dédiées aux flux temps réel sensibles et cheminent par des équipements réseau différents : ER1 et ER2 pour la famille FV, ER3 et ER4 pour la famille FR. Les chemins de chaque famille de VLAN sont garantis différents grâce à une configuration appropriée des ER.

Dans cette architecture, la redondance associée au double attachement est gérée par deux mécanismes indépendants :
- pour les flux circulant sur la famille FB de VLAN, le mécanisme de changement des adresses Mac, identique à celui du réseau maillé, est utilisé,
- pour les flux temps réel circulant sur les familles FV et FR de VLAN-, le mécanisme est identique à celui des réseaux indépendants.

Ainsi, pour les ET (ETD) n'utilisant pas les flux temps réel sensibles, seul le mécanisme de redondance de la famille FB est mis en oeuvre, ce qui permet l'utilisation de COTS logiciels et matériels. Pour les autres types d'ET (ETDT), les deux mécanismes doivent être implémentés simultanément, nécessitant une adaptation logicielle entre les couches 2 et 3 (liaison et IP).

Cependant, cette architecture ne peut être mise en oeuvre que si les conditions suivantes sont remplies :
- les ET doivent se raccorder aux ER par un lien VLAN supportant le standard 802.1q (multiplexage de VLAN sur un lien physique),
- comme l'adresse Mac d'un lien du double attachement n'est pas figée, les flux temps réel sensibles ne peuvent être transportés qu'en mode diffusé (« multicast » par exemple), donc d'un point vers au moins un autre point, ce qui convient bien dans des systèmes basés sur des architectures distribuées.

L'architecture décrite en référence à la figure 3 est relativement simple et facile à mettre en oeuvre. Elle peut être rendue encore plus performante en utilisant plus largement les nouvelles fonctions disponibles dans les ER.

La première de ces nouvelles fonctions est la fonction d' « IGMP snooping » (IGMP : Internet Group Management Protocol - IETF RFC 1112 et 2236, fonction implémentée localement sur un ER, et donc propriétaire. Elle intervient uniquement sur des flux diffusés en multicast.

La mise en service de la fonction d' IGMP snooping sur les équipements réseau, permet aux équipements terminaux de ne recevoir que les flux multicast dont ils ont besoin pour travailler. Ainsi, ils ne voient pas leur lien Ethernet engorgé de flux inutile qui, de plus, leur demanderait du traitement supplémentaire en réception.

L'architecture représentée en figure 4 permet une augmentation de la redondance au niveau du réseau, ce qui est rendu possible en donnant aux ER l'accès à tous les VLAN. On assure un chemin différent pour les familles FV et FR de VLAN (quand tous les ER sont opérationnels) par la mise en oeuvre de la fonction de partage de charge (« load balancing ») des standards RTSP/MSTP. Au lieu d'une seule instance dédiée aux VLAN de la famille FB, trois instances RSTP de MSTP sont utilisées. On obtient ainsi une topologie partiellement maillée comme représenté en figure 4. Cette figure est identique, du point de vue physique à la figure 3. La seule différence est que toutes les familles de VLAN- (FV, FR, et FB) cheminent sur tous les liens inter-ER. En outre, en situation normale, RSTP bloque un chemin pour chaque famille. Dans l'exemple représenté, le chemin de la famille FB est bloqué sur le lien 2, celui de la famille FV est bloqué sur le lien 8, et celui de la famille FR est bloqué sur le lien 7, mais il est bien entendu que ces bloquages pourraient se faire autrement, par exemple sur le même lien.

Cette architecture permet au système d'être plus robuste aux doubles défaillances du fait des reconfigurations possibles liées à RSTP/MSTP ; les familles FR et FV de VLAN bénéficient de la redondance de l'architecture maillée.

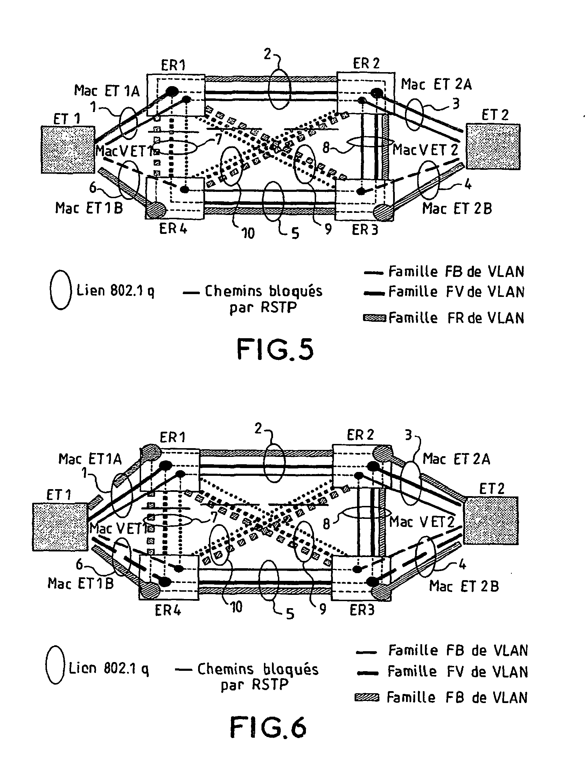

Il est encore possible d'augmenter les possibilités de reconfiguration RSTP/MSTP en utilisant une topologie totalement maillée telle que représentée en figure 5. L'architecture de la figure 5 est similaire à celle de la figure 4, et comporte en plus un lien physique 9 entre ER1 et ER3, et un autre lien physique 10 entre ER2 et ER4. Ces deux liens 9 et 10 constituent des chemins pour les trois familles FV, FR et FB. En situation normale, le protocole RSTP bloque, par exemple, les chemins des trois familles FV, FR et FB sur les liens 7, 9 et 10.

Il est possible d'enrichir encore la solution et d'augmenter les redondances au niveau des ET, en utilisant le double attachement pour les familles FR et FV de VLAN comme représenté en figure 6. L'architecture de la figure 6 est identique, du point de vue physique, à celle de la figure 5. La différence réside dans le fait que les liens 1, 3, 4 et 6 des deux ET constituent des chemins pour les trois familles FV, FR et FB. Le mécanisme de basculement entre les familles FR et FV s'en trouve complexifié et doit être réalisé de façon judicieuse, surtout si IGMP snooping est mis en oeuvre.

L'ensemble des mécanismes décrits auparavant ne sont pas restrictifs et admettent n'importe quelle topologie redondante de réseau et le réseau peut être même étendu par du routage de niveau 3 par un maping des VLAN.

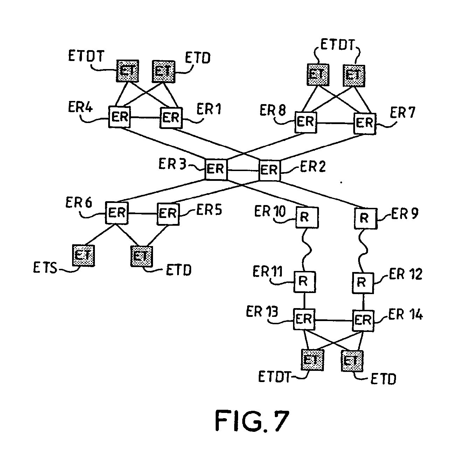

On a représenté en figure 7 un exemple non limitatifd'architecture étendue. Dans cet exemple, on retrouve l'architecture de base, telle que décrite en référence aux figures 3 à 6, dupliquée plusieurs fois. Cette architecture étendue comporte, dans le présent exemple, les quatre ER « de base » ER1 à ER4. On a relié ER2 et ER3 à d'autres ER, à savoir ER5 à ER10. Dans cet exemple, ER9 et ER10 sont des routeurs. Ces derniers sont en communication avec deux autres ER (ER11 et ER12), qui sont également des routeurs, et qui sont reliés chacun à un ER « classique » (tel que ER1 à ER8), à savoir ER13 et ER14 respectivement.. Les ER suivants : ER1, ER4, ER5 à ER8, ER13 et ER14 sont reliés à des équipements terminaux. On notera que les équipements terminaux peuvent être de l'un quelconque des trois types cités au début de la description détaillée (ETS, ETD ou ETDT), étant bien entendu que les ETS ne peuvent être reliés physiquement qu'à un seul ER à la fois, comme c'est le cas pour celui qui est relié à ER6.

En conclusion, on notera que l'architecture réseau décrite, basée sur la technologie VLAN, le double attachement et les protocoles RSTP/MSTP, utilise avantageusement les architectures réseau maillé et réseaux indépendants. Elle permet de répondre aux exigences de redondance et de disponibilité de systèmes sévères dans ces domaines avec les caractéristiques suivantes :
- utilisation de COTS logiciels ou matériels pour les équipements qui n'ont pas besoin de traiter les flux temps réel sensibles,
- utilisation de COTS pour l'infrastructure réseau,
- utilisation de protocoles standard : VLAN, RSTP et MSTP,
- pas de limitation de taille du réseau,
- peu d'impact sur les applications car l'implémentation est transparente à partir du niveau 3 (IP),
- développement logiciel limité à une adaptation légère entre les niveaux 2 et 3 (IP) pour les équipements terminaux devant traiter les flux temps réel sensibles,
- possibilité pour les récepteurs ayant à disposition les flux temps réels sensibles, d'implémenter un algorithme de basculement ou de gestion des duplications de l'information en fonction des besoins du système. Cet algorithme leur permet dans le deuxième cas d'assurer la continuité du service en cas d'une défaillance,
- possibilité de faire cohabiter des équipements hétérogènes tels que
   o des équipements à connexion unique comme une imprimante,
   o des équipements à connexion redondée, comme des stations de management, et ne traitant pas les flux temps réels sensibles,
   o des équipements traitant tous les types de flux.

## Revendications

1. Architecture de réseau Ethernet /IP, permettant une diffusion de flux de données sans interruption de service, ces flux cohabitant avec d'autres flux tolérant une interruption de service, **caractérisée en ce que** le réseau comporte une superposition de deux architectures de réseaux à tolérance de pannes, dont l'une est réalisée sous la forme d'un réseau unique à infrastructure maillée et l'autre sous la forme d'une infrastructure comportant deux réseaux indépendants.

2. Architecture selon la revendication 1, **caractérisée en ce que** les équipements terminaux, ayant une contrainte de disponibilité sur les flux qu'ils traitent, sont reliés par deux liens physiques à deux équipements distincts des infrastructures réseaux.

3. Architecture selon la revendication 2, **caractérisée en ce que** n'importe quel type d'équipement terminal communique avec n'importe quel autre type d'équipement terminal.

4. Architecture selon l'une des revendication 2 ou 3, **caractérisée en ce qu'**elle est extensible en termes de redondance.

5. Architecture selon l'une des revendications 1 à 3, **caractérisée en ce qu'**elle est extensible en termes de taille de réseau.

6. Architecture selon la revendication 5, **caractérisée en ce que** le réseau comporte des routeurs.

## Claims

1. Ethernet/IP network architecture that allows data flows to be conveyed without interruption to service, these flows coexisting with other flows that tolerate interruption to service, **characterized in that** the network consists of two fault tolerant network architectures that are superposed, one of which is implemented in the form of a single network having a mesh infrastructure and the other in the form of an infrastructure consisting of two independent networks.

2. Architecture according to Claim 1, **characterized in that** the items of terminal equipment, since they have an availability requirement on the flows they handle, are connected by two physical links to two separate items of equipment of the network infrastructures.

3. Architecture according to Claim 2, **characterized in that** any type of terminal equipment communicates with any other type of terminal equipment.

4. Architecture according to either of Claims 2 and 3, **characterized in that** it is extensible in terms of redundancy.

5. Architecture according to one of Claims 1 to 3, **characterized in that** it is extensible in terms of network size.

6. Architecture according to Claim 5, **characterized in that** the network is made up of routers.

## Patentansprüche

1. Ethernet/IP-Netzwerkarchitektur, die eine Verbreitung von Datenflüssen ohne Dienstunterbrechung ermöglicht, wobei diese Flüsse mit anderen Flüssen zusammen vorliegen, die eine Dienstunterbrechung tolerieren, **dadurch gekennzeichnet, dass** das Netzwerk eine Überlagerung von zwei Netzwerkarchitekturen mit Fehlertoleranz aufweist, von denen eine in Form eines einzigen Netzwerks mit vernetzter Infrastruktur und die andere in Form einer Infrastruktur hergestellt ist, die zwei unabhängige Netzwerke aufweist.

2. Architektur nach Anspruch 1, **dadurch gekennzeichnet, dass** die Endeinrichtungen, die eine Verfügbarkeitsbedingung an den von ihnen verarbeiteten Flüssen haben, durch zwei physikalische Bindeglieder mit zwei Einrichtungen verbunden sind, die von den Netzwerk-Infrastukturen getrennt sind.

3. Architektur nach Anspruch 2, **dadurch gekennzeichnet, dass** ein beliebiger Typ von Endeinrichtung mit einem beliebigen anderen Typ von Endeinrichtung kommuniziert.

4. Architektur nach einem der Ansprüche 2 oder 3, **dadurch gekennzeichnet, dass** sie bezüglich der Redundanz erweiterbar ist.

5. Architektur nach einem der Ansprüche 1 bis 3, **dadurch gekennzeichnet, dass** sie bezüglich der Netzwerkgröße erweiterbar ist.

6. Architektur nach Anspruch 5, **dadurch gekennzeichnet, dass** das Netzwerk Router aufweist.
